# EUROPÄISCHE PATENTANMELDUNG

(11) **EP 2 650 151 A2**
(43) Veröffentlichungstag der Anmeldung: **16.10.2013**
(21) Anmeldenummer: 13163731.6
(22) Anmeldetag: 15.04.2013
(51) Int. Cl.: B60G 21/055, F16F 1/38

(54) **Stabilisator für ein Kfz**

(30) Priorität: 13.04.2012 DE 102012206061
(71) Anmelder: VORWERK AUTOTEC GmbH & Co. KG, 42287 Wuppertal (DE)
(72) Erfinder: Krajewski, Andreas, 58332 Schwelm (DE); Naploszek, Hartwig, 45289 Essen (DE)
(74) Vertreter: Lippert, Stachow & Partner

(57) **Zusammenfassung**

Die Erfindung betrifft einen Drehstabilisator (1) für ein Kraftfahrzeug, umfassend einen Drehstab (20), der zwischen zwei Rädern einer Kfz-Achse anordenbar ist und an dessen beiden Endabschnitten jeweils ein abgewinkeltes Hebelarmelement (30) angreift, das endstämmig ein Befestigungsmittel (31) zur Befestigung an einer Radaufhängung aufweist, wobei zumindest zwei am Drehstab (20) angreifende und in Längsrichtung des Drehstabs (20) beabstandet angeordnete Stabilisatorlager vorgesehen sind zur Befestigung des Drehstabilisators (1) am Fahrzeugaufbau des Kraftfahrzeuges. Der erfindungsgemäße Drehstabilisator (1) zeichnet sich dadurch aus, dass der Drehstab (20) an seinen beiden Längsenden jeweils eine insbesondere topfartige Aufnahme (40) aufweist, in welcher ein Stabilisatorlager aufgenommen ist. Dabei sind beide Stabilisatorlager als Buchsenlager (60) ausgebildet mit einem insbesondere zylindrischen Lagerkern sowie einem, eine Tragfeder bildenden Elastomerkörper (64).

## Beschreibung

Die Erfindung betrifft einen Drehstabilisator für ein Kraftfahrzeug, umfassend einen Drehstab, der zwischen zwei Rädern einer Kfz-Achse anordenbar ist und an dessen beiden Endabschnitten jeweils ein abgewinkeltes Hebelarmelement angreift, das endstämmig ein Befestigungsmittel zur Befestigung an einer Radaufhängung aufweist, wobei zumindest zwei am Drehstab angreifende und in Längsrichtung des Drehstabs beabstandet angeordnete Stabilisatorlager vorgesehen sind zur Befestigung des Drehstabilisators am Fahrzeugaufbau des Kraftfahrzeuges. Kraftfahrzeugaufbau meint vorliegend die gesamte Karosserie einschließlich Bodengruppe bzw. Bodenblech.

Derartige Querstabilisatoren werden im Fahrzeugbau als Federelemente eingesetzt, die zur Verbesserung der Straßenlage des Kraftfahrzeuges dienen. Die gewünschte Federwirkung wird durch Torsion des in der Regel runden Drehstabes erreicht, der drehbar an der jeweiligen Karosserie des Fahrzeuges angebracht sind, wobei endstämmig und abgewinkelt zum Drehstab vorgesehene Hebel an entsprechende Radaufhängungen des Fahrzeugs wie beispielsweise Querlenker angebracht sind. Beide Hebelarmelemente des Stabilisators verlaufen in eingebautem Zustand in der Regel zumindest annähernd in Fahrzeuglängsrichtung.

Ein solcher Drehstabilisator dient insbesondere zur Beeinflussung der Wankbewegung bei der Kurvenfahrt eines Kraftfahrzeuges, indem beim Einfedern eines Rades über die Verdrehung des Stabilisators das gegenüber liegende Rad ebenfalls eingefedert wird. Ein ähnlicher Effekt tritt beim Ausfedern eines Rades auf, sodass folglich beim gleichzeitigen Ein- oder Ausfedern beider Räder einer Achse der Stabilisator keine Wirkung zeigt.

Die Befestigung herkömmlicher Drehstabilisatoren am Kraftfahrzeugaufbau wird üblicherweise mittels Lager, insbesondere Gummi/Metall-Lager durchgeführt, wobei jeweils ein Gummikörper den Drehstab des Stabilisators umschließt und das Lager mittels einer Schelle zur Halterung und Aufnahme des Gummikörpers mit dem Fahrzeugbau verbunden, insbesondere verschraubt wird. Ein solches Lager ist beispielsweise in der Offenlegungsschrift DE 10 2004 056 884 A1 offenbart.

Der Erfindung liegt die Aufgabe zugrunde, die beschriebenen herkömmlichen Drehstabilisatoren für Kraftfahrzeuge zu verbessern. Überraschenderweise wird diese Aufgabe schon mit einem Drehstabilisator mit den Merkmalen von Anspruch 1 gelöst. Der erfindungsgemäße Drehstabilisator zeichnet sich dadurch aus, dass der Drehstab des Stabilisators an seinen beiden Längsenden jeweils eine Aufnahme aufweist, in welcher ein Stabilisatorlager aufgenommen ist, wobei ein in der topfartigen Aufnahme aufgenommenes Stabilisatorlager als elastomeres Buchsenlager ausgebildet ist mit einem insbesondere zylindrischen Lagerkern sowie einem, eine Tragfeder bildenden Elastomerkörper.

Durch die erfindungsgemäße Gestaltung des Stabilisators wird erreicht, dass der Drehstab an seinen äußersten Enden mit dem Fahrzeugbau verbunden wird, sodass dieser im Betrieb im Wesentlichen auf Torsion, jedoch kaum auf Biegung beansprucht wird, was die Funktion des erfindungsgemäßen Stabilisators verbessert. Gleichzeitig wird durch die Anordnung des Elastomerkörpers zwischen dem jeweiligen Innenkern und der Innenwandung der topfartigen Aufnahme zur Aufnahme des Stabilisatorlagers der Fahrkomfort des KFZ erhöht, da eine im Betrieb auftretende einseitige oder zweiseitige Belastung quer zur Fahrtrichtung, beispielsweise aufgrund einer Querbelastung eines oder beider Räder, von den Stabilisatorlagern durch Auslenkung des jeweiligen Elastomers in axialer Richtung aufgenommen werden kann. Die Aufnahme der Querbelastung erfolgt vorteilhafterweise jeweils endstämmig zum Drehstab.

Vorteilhafte Ausführungsformen sowie weitere erfindungswesentliche Merkmale sind in den Unteransprüchen sowie in der nachfolgenden allgemeinen sowie der speziellen Beschreibung angegeben.

Zweckmäßigerweise kann eine Lageraufnahme des erfindungsgemäß ausgebildeten Drehstabilisators einen zylinderförmigen Hohlraum zur Aufnahme eines Stabilisatorlagers bereitstellen, beispielsweise kann die Lageraufnahme durch einen hohlzylinderartigen Abschnitt bereitgestellt werden.

Zweckmäßigerweise kann die Lageraufnahme mit einer zylinderförmigen Innenmantelfläche ausgebildet sein, an welcher sich das Lager abstützt, wobei vorteilhafterweise diese Aufnahme auf seiner dem Drehstab zugeordneten Seite geschlossen sein kann, insbesondere zur Vermeidung, dass von dieser Seite her Schmutz oder Feuchtigkeit in die Lageraufnahme bzw. das Lager eindringt.

Vorzugsweise ist die Achse der jeweiligen Lageraufnahme zur Drehstabachse ausgerichtet und liegt auf dieser.

In einer besonders zweckmäßigen Ausführungsform des erfindungsgemäßen Drehstabilisators kann vorgesehen sein, dass das in der Lageraufnahme aufgenommene Stabilisatorlager einen zylindrischen Lagerkern aufweist, welcher mit dem Fahrzeugbau, beispielsweise starr, verbindbar ist. Dabei kann vorgesehen sein, dass an dem Lagerkern ein sich in Lagerlängsrichtung erstreckender Bolzen vorgesehen ist, beispielsweise in Form eines Schraubbolzens, der integral mit dem Lagerkern hergestellt oder an diesem Lagerkern befestigt ist.

Der Elastomerkörper kann durch Vulkanisation mit dem in der Regel metallischen Lagerkern fest verbunden sein. Die Tragfeder kann im Wesentlichen rotationssymmetrisch um den Lagerkern herum angeordnet sein, wobei sich der Elastomerkörper mit einer außen liegenden zylinderartigen Mantelfläche an der Innenmantelfläche der Aufnahme abstützen kann.

Besonders zweckmäßig ist es bei einem solchen Stabilisatorlager, wenn an der Außenmantelfläche des Elastomerkörpers eine Außenhülse, beispielsweise aus Metall, Kunststoff oder einem Verbundwerkstoff vorgesehen ist, mit welcher sich das Lager an der Innenmantelfläche der topfartigen Aufnahme abstützt, wobei der eigentliche Elastomer des Elastomerkörpers an der Außenhülse anvulkanisiert sein kann. Bei dieser Gestaltung kann die Außenhülse einen über deren gesamte Längserstreckung axial verlaufenden Schlitz aufweisen, wobei der Elastomerkörper in diesem geschlitzten Bereich im entspannten Zustand des Lagers auch geschlitzt sein kann, derart, dass beim Einbau dieses Stabilisatorlagers durch Aufbringen einer radialen Vorspannung auf den Elastomerkörper diese Schlitze geschlossen werden. Durch einem derartigen Aufbau des Stabilisatorlagers als sogenanntes Schlitzbuchsenlager in dem erfindungsgemäßen Drehstabilisator wird erreicht, dass die radiale und torsionale Kennungen des Lagers sehr genau eingestellt werden können, insbesondere derart, dass das Lager radial hart und torsional weich arbeitet.

Darüber hinaus kann vorgesehen sein, den Elastomerkörper in der Lageraufnahme soweit vorzuspannen, dass bei den zu erwartenden Betriebskräften auf das Lager das Elastomer immer druckbelastet bleibt und in keiner Betriebssituation in einen zugbelasteten Betriebszustand übergeht, sodass die Standzeit des Lagers erhöht wird.

In einer weiteren Ausbildung kann bei dem erfindungsgemäßen Drehstabilisator ein Stabilisatorlager als elastomeres Buchsenlager mit einer Außenhülse ausgebildet sein, wobei diese Außenhülse sich aus mehreren, umfänglich um den Elastomerkörper herum angeordnete und mit diesem durch Vulkanisieren verbundene Schalenteile zusammensetzt, und wobei die einzelnen Schalenteile wiederum im nicht eingebauten Zustand des Lagers umfänglich beabstandet sein können, und in den Schlitzbereichen wiederum der Elastomerkörper geschlitzt sein kann, wobei diese Schlitze in der Außenhülse als auch im Elastomerkörper beim Einbringen des Lagers in eine hohlzylinderartige Lageraufnahme am Drehstab des Drehstabilisators durch Aufbringen einer Vorspannung auf das Elastomer geschlossen werden.

Grundsätzlich kann ein wie beschrieben gestaltetes elastomeres Buchsenlager mit Außenhülse formschlüssig, kraftschlüssig oder stoffschlüssig an der Innenmantelfläche einer hohlzylinderförmigen Lageraufnahme anliegen. Eine stoffschlüssige Verbindung kann beispielsweise durch Verkleben erfolgen. Eine formschlüssige Verbindung, derart, dass eine relative Bewegung der Außenhülse des Lagers zur topfartigen Aufnahme verhindert wird, kann beispielsweise durch das Vorsehen von Vorsprüngen bzw. zugeordneten Anschlagsflächen an der Außenhülse des Lagers bzw. der topfartigen Aufnahme realisiert sein.

Der Drehstab des erfindungsgemäßen Drehstabilisators kann je nach spezifischer Anwendung und Anforderung zur Bereitstellung einer vorgegebenen Torsionskennung aus unterschiedlichen Materialien wie beispielsweise Metall, Verbundwerkstoffe, Kohlefaserwerkstoffe etc. hergestellt sein. Dabei kann der Drehstab zumindest abschnittsweise Hohl- oder Vollmaterial umfassen.

Besonders zweckmäßig kann es sein, wenn der Drehstab endstämmig, d.h. an seinen beiden Enden jeweils hohl ausgebildet, insbesondere aufgebohrt, ist zur Bereitstellung der beiden Lageraufnahmen, in welche jeweils ein Stabilisatorlager eingeführt wird. Dabei kann auch vorgesehen sein, dass der Drehstab an seinen Enden zur Bereitstellung der Aufnahme mittels herkömmlicher Umformtechniken aufgeweitet ist, um eine Aufnahme mit vorgegebenem Durchmesser für das jeweilige Lager bereitzustellen.

Grundsätzlich kann der Innendurchmesser einer Aufnahme eines Stabilisatorlagers bei dem erfindungsgemäßen Stabilisator kleiner oder größer als der Außendurchmesser des Drehstabes sein. Bei vielen Anwendungen ist ein geringer Durchmesser des Stabilisatorlagers, insbesondere im Falle eines elastomeren Buchsenlagers zu bevorzugen, da ein solches Lager auf einfache Weise radial sehr hart ausgebildet werden kann.

Insbesondere in solchen Fällen, bei welchen ein Stabilisatorlager des erfindungsgemäßen Drehstabilisators als elastomeres Buchsenlager mit größerem Durchmesser ausgebildet ist, kann vorgesehen sein, zur Bereitstellung einer radialen Härte in der Tragfeder mehrere, insbesondere zwei radial beabstandete Elastomerschichten vorzusehen, wobei radial benachbarte Elastomerschichten jeweils durch einen hülsenartigen Einleger getrennt und mit diesem insbesondere durch Vulkanisieren verbunden sein können.

In einer weiteren Ausführungsform kann die Lageraufnahme zur Aufnahme eines Stabilisatorlagers endstämmig zum Drehstab stoffschlüssig an diesen angebracht sein, insbesondere durch Anschweißen oder Ankleben.

Auch für das Anbringen der beiden zum Drehstab abgewinkelten Hebelarmelemente an dessen beiden Endabschnitten sind im Rahmen der Erfindung verschiedene Gestaltungen denkbar. Beispielsweise kann ein Hebelelement stoffschlüssig an einer Aufnahme eines Stabilisatorlagers und/oder stoffschlüssig an dem Drehstab selbst angebracht sein.

Besonders zweckmäßig ist es, wenn ein Hebelelement integral mit einer Aufnahme eines Stabilisatorlagers hergestellt ist und dieses Teil stoffschlüssig, beispielsweise durch Schweißen oder Verkleben am Drehstab angebracht ist. In einer besonderen Ausführungsform kann insbesondere vorgesehen sein, das Hebelarmelement als Blechteil auszuführen, wobei an seinem drehstabseitigen Ende ein zylindermantelförmiger Durchzug vorgesehen sein kann zur Bereitstellung einer Lageraufnahme.

Wie der Drehstab, kann ein Hebelelement je nach spezifischer Anforderung an den erfindungsgemäßen Drehstabilisator Metall, Kunststoff, Kohlefaser und/oder ein Verbundwerkstoff umfassen, wobei die beiden Hebelarmelemente nicht in jeder Ausführungsform aus dem gleiche Material wie der Drehstab und/oder die Lageraufnahme ausgebildet sein müssen.

Grundsätzlich können bei dem erfindungsgemäßen Drehstabilisator beide Lageraufnahmen, Stabilisatorlager und/oder Hebelelemente bezüglich ihres Aufbaus und ihrer Materialbeschaffenheit identisch ausgebildet sein.

Die Erfindung wird im Folgenden durch das Beschreiben einiger Ausführungsformen unter Bezugnahme auf die beiliegenden Zeichnungen erläutert, wobei
- Figur 1: eine Ausführungsform eines erfindungsgemäß gestalteten Drehstabilisators 1 in einer perspektivischen Ansicht,
- Figur 2: eine Teilansicht des Drehstabilisators 1 gemäß Figur 1 in einer Aufsicht,
- Figur 3: den Ausschnitt des erfindungsgemäß gestalteten Drehstabilisators 1 gemäß Figur 2 in einer perspektivischen Seitenansicht,
- Figur 4: den Ausschnitt des erfindungsgemäß gestalteten Drehstabilisators 1 gemäß Figur 2 in einer Seitenansicht parallel zur Achse X des Drehstabes,
- Figur 5: eine Schnittdarstellung in der in Figur 4 angegebenen Ebene A-A,
- Figur 6: den Ausschnitt des erfindungsgemäß gestalteten Drehstabilisator 1 gemäß Figur 2 in einer weiteren Seitenansicht und
- Figur 7: eine Schnittdarstellung des in Figur 6 angegebenen Ausschnittes des erfindungsgemäß gestalteten Drehstabilisators 1 in der Ebene B-B
zeigt.

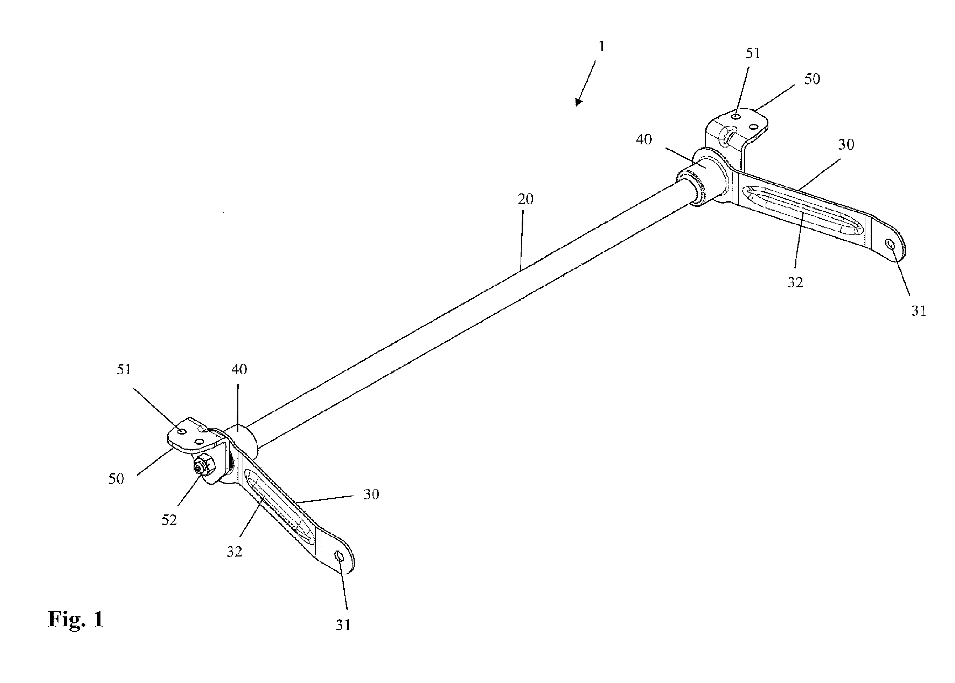

Figur 1 zeigt einen erfindungsgemäß gestalteten Drehstabilisator 1 zur Anordnung zwischen zwei Rädern einer Kraftfahrzeugachse. Wesentliche Bestandteile des Drehstabilisators 1 sind der Drehstab 20 sowie die beiden jeweils im Bereich eines Endabschnittes des Drehstabes angewinkelt angeordneten Hebelarmelemente 30, welche in der beschriebenen Ausführungsform etwa 90° zum Drehstab orientiert sind. An dem, dem Drehstab 20 abgewandten Ende des gestreckten Hebelarmelementes 30 ist jeweils eine Bohrung 31 vorgesehen, über welche mittels eines Bolzen das jeweilige Hebelarmelement 30 an einer Radaufhängung, insbesondere einem Querlenker der Radaufhängung befestigbar ist.

Im Bereich der Längsenden des Dreharms 20 ist jeweils eine zylinderförmige Aufnahme 40 vorgesehen, welche ein in der Figur nicht erkennbares Stabilisatorlager aufnimmt, wobei sich der Kern des Lagers in der beschriebenen Ausführungsform bolzenartig in Längsrichtung des Drehstabes 20 nach außen erstreckt. Dieser Bolzen trägt an seinem äußeren Ende ein Gewinde, mit welchem sich der Bolzen durch eine Befestigungsbohrung an einem Befestigungswinkel 50 erstreckt, wobei der Winkel 50 mittels einer Mutter 52 an dem Innenteil des Stabilisatorlagers befestigt ist. Der karosserieseitige Schenkel des Befestigungswinkels 50 weist zwei Befestigungsbohrungen 51 auf, über welche der Winkel 50 und damit der Drehstabilisator 1 am Fahrzeugaufbau des Kraftfahrzeuges befestigbar ist.

In der beschriebenen Ausführungsform ist der Drehstab 20 zur Einsparung von Gewicht als Stahlrohr ausgebildet. Ein derartiges Rohr besitzt ein günstigeres Verhältnis von Widerstandsmoment gegen Torsion zur Rohrmasse im Vergleich zu einem Vollstab. Demgegenüber sind die Hebelelemente 30 aus einem Stahlblech geformt, wobei zwischen den beiden Längsenden der Hebelelemente eine sich längs erstreckende Versteifungssicke 32 vorgesehen ist. Durch die Umformung im Bereich der Versteifungssicke resultiert vorteilhafterweise ferner eine Kaltverfestigung des Blechs.

Beide Lageraufnahmen, Stabilisatorlager und Hebelelemente sind bei dem beschriebenen, erfindungsgemäßen Drehstabilisator 1 bezüglich ihres Aufbaus und ihrer Materialbeschaffenheit identisch ausgebildet, sodass im Folgenden nur der Aufbau des Drehstabilisators an einer der beiden Längsseiten beschrieben wird.

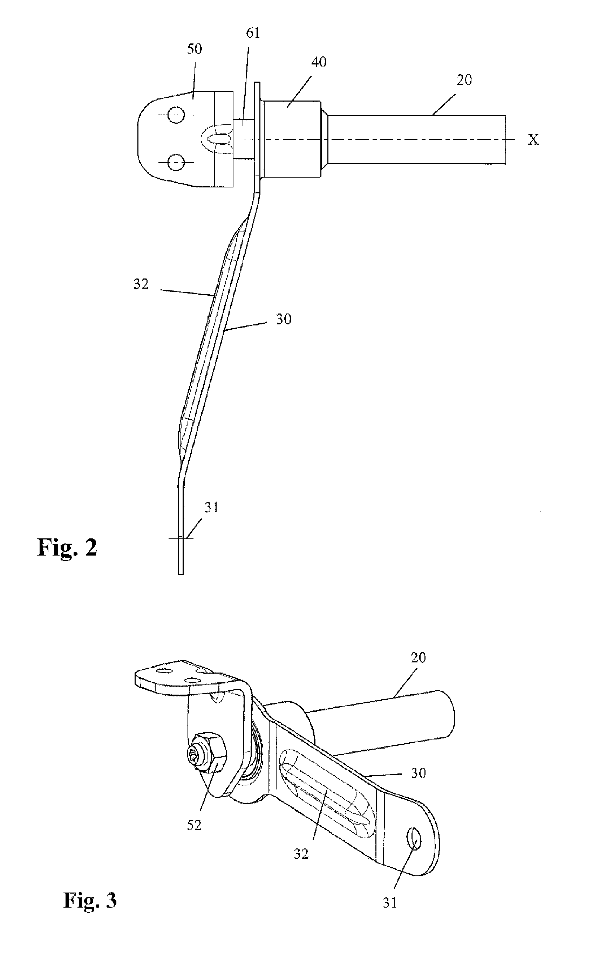

Figur 2 zeigt die linke Seite des Drehstabilisators gemäß Figur 1 in einer Aufsicht auf den karosserieseitigen Schenkel des Befestigungswinkels 50. In der Figur ist der sich aus der topfartigen Aufnahme 40 axial nach außen erstreckende Lagerinnenkern 61 zu erkennen, an welchem der Befestigungswinkel 50 mittels der Mutter 52 befestigt ist. Wie aus Figur 2 auch hervorgeht, verläuft das aus einem Blech geformte Hebelelement 30 im Bereich der Aufnahme 40 etwa senkrecht zum Dreharm 20, im mittleren Bereich, in welchem die Versteifungssicke 32 angeordnet ist, etwas abgeschrägt zur Drehstabachse X und an seinem dem Drehstab abgewandten Ende wiederum senkrecht zum Drehstab.

Figur 3 zeigt die in Figur 2 dargestellte Detailansicht in einer perspektivischen Seitenansicht.

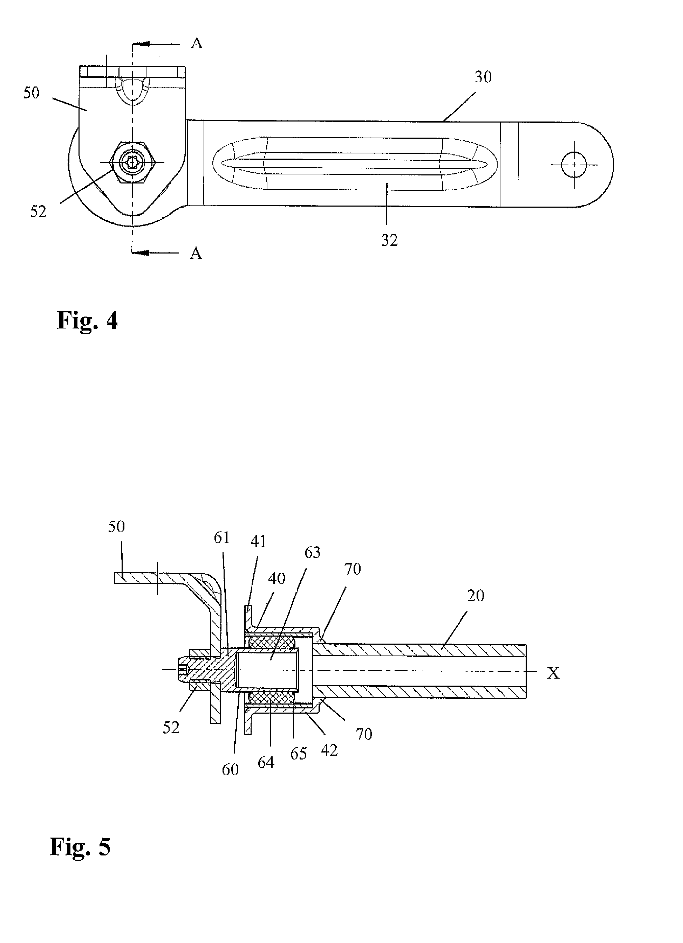

Figur 4 zeigt den Ausschnittbereich des Drehstabilisators 1 in einer Ansicht parallel zur Drehstabachse X, Figur 5 in der Schnittebene A-A gemäß Figur 4. Wie zu erkennen, ist die hohlzylinderartige Lageraufnahme 40 mittels einer umlaufenden Schweißnaht 70 an einem Ende des rohrförmigen Drehstabes 20 befestigt, sodass radial innen zur Lageraufnahme 40 ein topfartiger Hohlraum zur Aufnahme des Stabilisatorlagers 60 bereitgestellt ist. Der "Boden" der topfartigen Lageraufnahme wird gebildet durch die Schweißnaht 70 sowie eine längsseitige Stirnfläche des Drehstabes 20 und ist in der beschriebenen Ausführungsform nicht geschlossen, da der Drehstab als Rohr ausgebildet ist. Der beschriebene Aufbau stellt jedoch sicher, dass von der Bodenseite der Lageraufnahme kein Schmutz in das Lager eindringen kann.

In der beschriebenen Ausführungsform weist das Stabilisatorlager 60 einen rotationssymmetrischen Lagerkern 61 auf, welcher koaxial zum Drehstab 20 von der Lageraufnahme 40 aufgenommen ist. Zur Gewichtsverringerung weist der Lagerkern 61 in einem Abschnitt, mit welchem er sich in die Lageraufnahme 40 hinein erstreckt, eine Bohrung 63 auf.

Wie aus Figur 5 ersichtlich, ist in der angegebenen Ausführungsform des erfindungsgemäßen Drehstabilisators 1 das Stabilisatorlager als elastomeres Buchsenlager 60 ausgebildet, wobei der elastomere Lagerkörper 64 an den Lagerkern 61 anvulkanisiert ist und die Elastomerkörper die Tragfeder des Stabilisatorlagers bildet, welche in der angegebenen Ausführungsform im eingebauten Zustand vorgespannt ist. Dabei weist das Lager 60 eine den Kern 61 sowie den Elastomerkörper 64 umgebende Außenhülse 65 auf, welche wiederum durch Vulkanisieren mit dem Elastomerkörper verbunden ist. In der beschriebenen Ausführungsform ist der Elastomerköper einschichtig aufgebaut.

Die Außenhülse kann in einer Ausführungsform den Elastomerkörper vollständig umschließen, wobei mittels einer nachfolgenden Kalibrierung durch Umformung dieser Außenhülse der radial innen liegende Elastomerkörper komprimiert wird. Nach dieser Kalibrierung des Lagers kann dieses in die Lageraufnahme 40 eingepresst werden.

In einer anderen Ausführungsform wird das als elastomeres Buchsenlager 60 ausgebildete Stabilisatorlager in Form eines Schlitzbuchsenlager ausgeführt, wobei die Außenhülse 65 als auch der ansonsten rotationssymmetrische Elastomerkörper 64 axial geschlitzt sind, und das Buchsenlager vor dem Einführen in die Lageraufnahme 40 radial vorgespannt wird, sodass sich der Schlitz schließt und das Lager unter der besagten Vorspannung eingeführt werden kann. Zweckmäßigerweise ist die Vorspannung so eingestellt, dass sich das Lager unter den auftretenden Betriebskräften in der Aufnahme 40 nicht drehen kann, d.h. die Außenhülse 65 liegt fest an der inneren Mantelfläche der Lageraufnahme 40 an und bewegt sich zu dieser nicht.

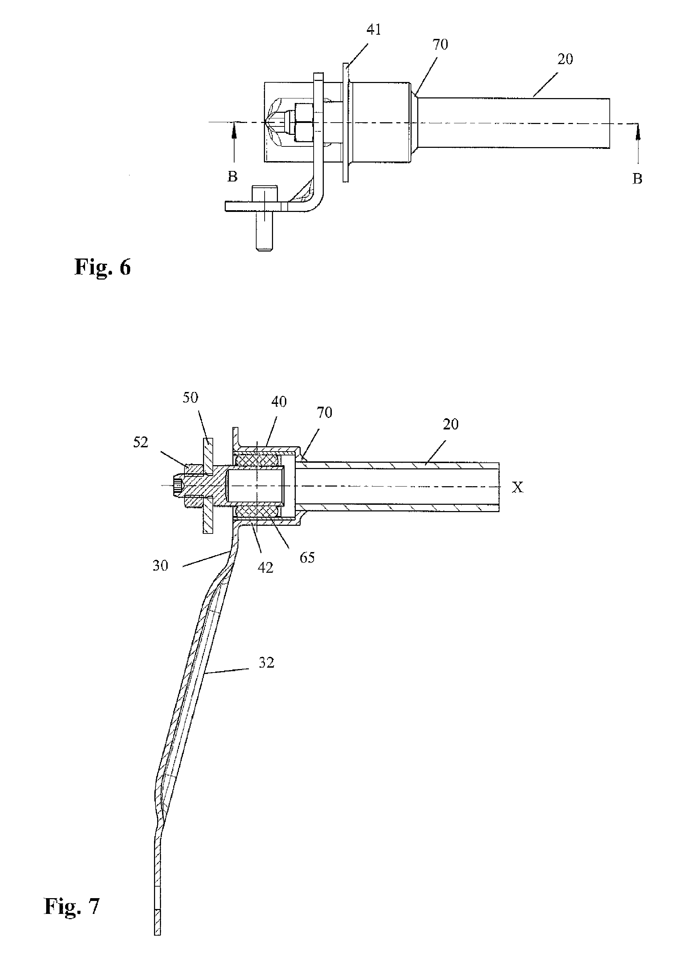

Figur 6 zeigt wiederum den angegebenen Ausschnitt des erfindungsgemäß gestalteten Drehstabilisators aus einer im Vergleich zu Figur 2 senkrechten Blickrichtung, Figur 7 stellt eine Schnittdarstellung des Ausschnittes in der in Figur 6 angegebenen Ebene B-B dar. Wie aus der Schnittdarstellung erkennbar, ist in der angegebenen Ausführungsform des erfindungsgemäßen Drehstabilisators 1 das abgewinkelte Hebelarmelement 30 integral mit der Lageraufnahme 40 hergestellt und nachfolgend mit dem Drehstab 20 verschweißt. Insbesondere kann dieses integrale Element durch Umformung eines entsprechenden Bleches und Tiefziehen des Bleches zur Gestaltung eines Durchzuges 42 hergestellt sein, welcher die besagte Lageraufnahme 40 bereitstellt, wobei sich in der beschriebenen Ausführungsform dieser Durchzug in Richtung zum Drehstab 20 hin erstreckt.

In einer nicht dargestellte Ausführungsform können die Lageraufnahme sowie das Hebelelement zunächst auch getrennt voneinander hergestellt sein, wobei nachfolgend die Lageraufnahme an den Drehstab angebracht, und das Hebelarmelement entweder auch am Drehstab oder an der Lageraufnahme angebracht wird, insbesondere durch Schweißen oder Kleben.

### Bezugszeichenliste

| | |
|---|---|
| 1 | Drehstabilisator |
| 20 | Drehstab |
| 30 | Hebelarmelement |
| 31 | Befestigungsbohrung |
| 32 | Vertiefungssicke |
| 40 | Lageraufnahme |
| 41 | Blechabschnitt |
| 42 | Durchzug |
| 50 | Befestigungswinkel |
| 51 | Befestigungsbohrung |
| 52 | Mutter |
| 60 | Buchsenlager |
| 61 | Lagerkern |
| 62 | Gewinde |
| 63 | Bohrung |
| 64 | Elastomerkörper |
| 65 | Außenhülse |
| 70 | Schweißnaht |
| X | Drehstabachse |
| A-A | |
| B-B | Schnittebene |

## Patentansprüche

1. Drehstabilisator (1) für ein Kraftfahrzeug umfassend einen Drehstab (20), der zwischen zwei Rädern einer KFZ-Achse anordnenbar ist und an dessen beiden Endabschnitten jeweils ein abgewinkeltes Hebelarmelement (30) angreift, das endstämmig ein Befestigungsmittel (31) zur Befestigung an einer Radaufhängung aufweist, wobei zumindest zwei am Drehstab angreifende und in Längsrichtung des Drehstabs beabstandete Stabilisatorlager vorgesehen sind zur Befestigung des Drehstabilisators am Fahrzeugaufbau des KFZ, **dadurch gekennzeichnet, dass** der Drehstab (20) an seinen beiden Längsenden jeweils eine insbesondere topfartige Aufnahme (40) aufweist, in welcher ein Stabilisatorlager aufgenommen ist, wobei beide Stabilisatorlager jeweils als Buchsenlager (60) ausgebildet sind mit einem insbesondere zylindrischen Lagerkern sowie einem, eine Tragfeder bildenden Elastomerkörper (64).

2. Drehstabilisator nach Anspruch 1, **dadurch gekennzeichnet, dass ein** Stabilisatorlager einen, insbesondere zylindrischen, Lagerkern (61) aufweist, welcher mit Fahrzeugaufbau verbindbar ist.

3. Drehstabilisator nach Anspruch 1 oder 2, **dadurch gekennzeichnet , dass** an dem Lagerkern (61) ein sich in Lagerlängsrichtung erstreckender Schraubbolzen vorgesehen ist.

4. Drehstabilisator nach einem der Ansprüche 1, 2 oder 3, **dadurch gekennzeichnet, dass** der Lagerkern (61) mit einem Haltearm (50) verbunden ist, der an seinem Lagerkern-entfernten Ende Befestigungsmittel (51) zur Befestigung am Fahrzeugaufbau aufweist.

5. Drehstabilisator nach einem der Ansprüche 1 bis 4,
**dadurch gekennzeichnet, dass** radial außen zum Elastomerkörper (64) eines Stabilisatorlagers eine insbesondere in Längsrichtung durchgängig geschlitzte Außenhülse (65) vorgesehen ist, welche sich an der Innenmantelfläche der Aufnahme (40) abstützt.

6. Drehstabilisator nach einem der Ansprüche 1 bis 5,
**dadurch gekennzeichnet, dass** der Innendurchmesser einer Aufnahme eines Stabilisatorlagers kleiner als der Außendurchmesser des Drehstabes ist.

7. Drehstabilisator nach einem der Ansprüche 1 bis 6,
**dadurch gekennzeichnet, dass** der Drehstab (20) endstämmig jeweils hohl ausgebildet ist zur Bereitstellung von zwei Lageraufnahmen.

8. Drehstabilisator nach einem der Ansprüche 1 bis 7,
**dadurch gekennzeichnet, dass** eine Aufnahme (40) zur Aufnahme eines Stabilisatorlagers endstämmig an den Drehstab stoffschlüssig angebracht ist.

9. Drehstabilisator nach einem der Ansprüche 1 bis 8,
**dadurch gekennzeichnet, dass** ein Hebelelement (30) integral mit einer Aufnahme (40) eines Stabilisatorlagers hergestellt ist.

10. Drehstabilisator nach einem der Ansprüche 1 bis 9, **dadurch gekennzeichnet, dass** ein Hebelarmelement (30) als Blechteil ausgeführt ist und an seiner drehstabseitigen Ende ein zylindermantelförmiger Durchzug vorgesehen ist zur Bereitstellung einer Lageraufnahme (40).

11. Drehstabilisator nach einem der Ansprüche 1 bis 10, **dadurch gekennzeichnet, dass** ein Hebelelement stoffschlüssig an einer Aufnahme eines Stabilisatorlagers angebracht ist.
